# EUROPÄISCHE PATENTANMELDUNG

(11) **EP 0 681 154 A1**
(43) Veröffentlichungstag der Anmeldung: **08.11.1995**
(21) Anmeldenummer: 95106326.2
(22) Anmeldetag: 27.04.1995
(51) Int. Cl.: F25J 3/06, B01D 53/00, B01D 5/00, B01D 8/00

(54) **Verfahren zur Abscheidung von dampfförmigen Inhaltsstoffen aus mit hohen Anteilen leichtsiedender Komponenten beladener Luft**

(30) Priorität: 05.05.1994 DE 4415861
(71) Anmelder: Förster, Hans, Dr., D-39110 Magdeburg (DE)
(72) Erfinder: Förster, Hans, Dr., D-39110 Magdeburg (DE)
(74) Vertreter: Leinung, Günter

(57) **Zusammenfassung**

Luft- und Gasreinigung, dampfförmige Inhaltsstoffe, kombinierte Kälteanwendung durch Kaltdampf- und Kaltluft-Kälteerzeugung, Direkt-Kondensation, Kaltwäsche, Luftentspannung, Kondensate der Inhaltsstoffe als Kälteträger, Gewinnung hoher Anteile leichter, kondensierbarer Komponenten, absorptive Abtrennung nichtkondensierbarer leichter Komponenten.
Verfahren zur Abscheidung von dampfförmigen organischen Inhaltsstoffen mit hohen Anteilen leichtsiedender Komponenten aus beladener Luft.

Aufgabe der Erfindung ist es, ein Verfahren aufzuzeigen, wonach große Anteile von leichten kondensierbaren Komponenten wie Propan und Butan sowie von nichtkondensierbaren Komponenten wie Äthan ohne Fremdstoffe abscheidbar sind.

Die Aufgabe wird durch Direktkondensation in einer Kaltwäsche (2) gelöst,wobei umlaufende Ströme (3,4,5) des gewonnenen Kondensates als Kälteträger in einer Kaltwäsche (2) für die Direktkondensation der kondensierbaren leichten Komponenten und als Absorptionsmittel für die nichtkondensierbaren Komponenten verwendet werden, wobei im letztgenannten Fall eine Entgasung des Kälteträgers vor seiner Abkühlung erfolgt. Der flüssige Wertstoff wird bei tiefen Temperaturen aus der Kaltwäsche entnommen und vor dem Wärmeaustausch durch eine Pumpe (14) auf hohen Druck gebracht. Die Fremdkältewird bei mäßigen Parametern durch eine Kaltdampf-Kälteanlage (11) und bei anspruchsvollen Kälteparametern durch eine Kaltluft-Kälteanlage (12) zur Verfügung gestellt.

## Beschreibung

Das Verfahren ist anwendbar zur Abtrennung und Rückgewinnung von organischen Dämpfen aus der Verdrängungsluft von Raffinerietankanlagen und anderen Flüssigproduktlagern unter Einhaltung strenger Vorschriften zur Reinhaltung der Luft.
Nach der Anmeldung gemäß Akt.-Zeichen P 44 00 456.7-13 wird ein Verfahren zur gleichzeitigen Abscheidung von organischen und anorganischen dampfförmigen Inhaltsstoffen aus Luft bzw. technischen Gasen durch Direktkondensation in einer Kaltwäsche vorgeschlagen. Hierbei wird ein umlaufender Strom der gewonnenen Kondensate als Kälteträger in der Kaltwäsche verwendet, der im Bereich mäßiger Kälteparameter durch eine Kaltdampf-Kälteanlage und bei anspruchsvollen Kälteparametern durch eine Kaltluft-Kälteanlage unterkühlt wird, wobei der Kälteinhalt der Reinluft regenerativ zur Kühlung des Kälteträgers der Obersäule der Kaltwäsche und zur Vorkühlung der verdichteten Luft der Kaltluft-Kälteanlage verwendet wird. Mit diesem Verfahren ist es jedoch nicht möglich, hohe Anteile leichter Komponenten oder nichtkondensierbare organische Stoffe aus der Luft abzutrennen, weil im Sumpf der Kolonne bei leichtem Überdruck und bei Umgebungstemperatur nur eine begrenzte Menge dieser Komponenten im Gesamtkondensat löslich ist und flüssig abgezogen werden kann. Das führt dazu, daß sich die leichten Komponenten in der Mitte der Kaltwäsche 2 anreichern und schließlich in der zu reinigenden Luft verbleiben.
Leichte Kohlenwasserstoffe mit 1 oder 2 C-Atomen wie Äthan können aus Luft bei Temperaturen bis -150 °C nicht durch Kondensation abgetrennt werden, gelten also unter diesen Bedingungen als nichtkondensierbar. Bei der thermischen Trennung von Stoffen wird es gerne vermieden, als Hilfsmedium prozeßfremde Produkte einzusetzen, weil sonst zusätzliche Verunreinigungen und zusätzliche Trennaufgaben entstehen und die Erzeugung reiner prozeßeigener Stoffe häufig noch schwieriger wird.
Deshalb ist die Aufgabe gestellt, ein Verfahren zur Abscheidung von dampfförmigen Inhaltsstoffen aufzuzeigen, mit dem große Anteile von leichten, kondensierbaren Komponenten wie Propan und Butan sowie von nichtkondensierbaren Komponenten wie Äthan ohne Fremdstoffe abscheidbar sind.
Erfindungsgemäß wird die Aufgabe dadurch gelöst, daß die in großen Mengenanteilen enthaltenen leichten, aber kondensierbaren Komponenten aus der Kaltwäsche 2 an einer Stelle mit tiefen Temperaturen flüssig entnommen, auf höheren Druck gebracht und nach regenerativer Nutzung ihres Kälteinhaltes in einem Wärmeübertrager 10 bevorzugt als Wertstoff gewonnen werden, so daß sich diese leichten Stoffe im Prozeß nicht anreichern.

Die erfindungsgemäße Lösung zur Abscheidung von nichtkondensierbaren leichten Komponenten besteht darin, daß der umlaufende Teil des Eigenkondensates nicht nur als Kälteträger für die Kaltwäsche 2 verwendet wird sondern gleichzeitig als Absorptionsmittel für nichtkondensierbare Komponenten, indem der kursierende Kälteträger vor der Abkühlung im Kälteteil thermisch entgast wird und als Wärmequelle für die Entgasung vorzugsweise die Verdichtungswärme aus der Kaltluft-Kälteanlage 12 verwendet wird.
Das beschriebene Verfahren ist auch dann durchführbar, wenn anstelle der Untersäule der Kaltwäsche 2, zwischen Zulauf des Kälteträgerstroms 3 und Sumpf, eine separate Waschkolonne und statt eines Entnahmebodens 13 der Sumpf der separaten kälteren Waschkolonne der Kaltwäsche 2 verwendet wird.

Für stark ungleichmäßigen Anfall beladener Luft bzw. für große Unterschiede im Beladungsgrad kann das vorgeschlagene Verfahren mit Kälteträgerspeichern 29 und 30 ausgeführt werden, die gasseitig an der Kaltwäsche 2 atmen und eine Entnahme von vorgekühltem Kälteträger nach Bedarf ermöglichen und damit die Wirtschaftlichkeit des Verfahrens außerordentlich verbessern.
Die Vorteile gegenüber konkurrierenden Verfahren bestehen nicht nur darin, daß die gestellte anspruchsvolle Aufgabe überhaupt erfüllt werden kann, sondern daß die erfindungsgemäße Lösung ein kontinuierliches Verfahren darstellt mit sehr geringen Energieverbräuchen und daß Fremdmedien für die Trennaufgabe nicht erforderlich sind. Weitere Vorteile beziehen sich auf die geringen Abmessungen der erforderlichen Ausrüstungen, die geringe Festkosten zur Folge haben. Durch Einsatz von Kälteträgerspeichern sind in Tanklagern Dämpfespeicher verzichtbar. Ein weiterer Vorteil besteht in der Beherrschung des Wasserdampfgehaltes der Luft.

Die Erfindung wird anhand von zwei verfahrenstechnischen Prinzipskizzen beschrieben:

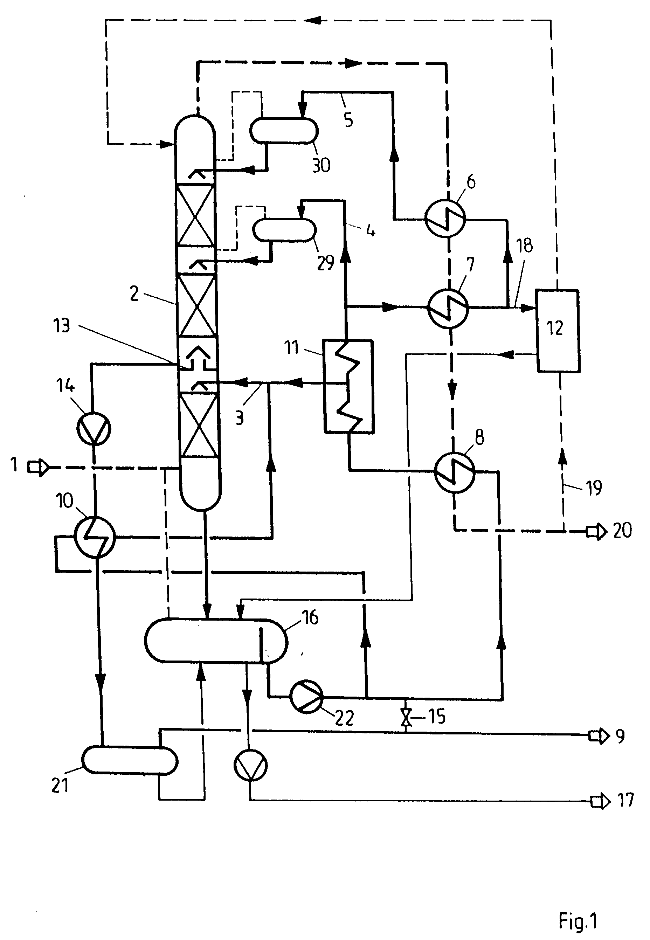

- Fig. 1: zeigt das Verfahrensprinzip für den Anwendungsfall mit hohem Mengenanteil kondensierbarer leichter Komponenten in der Luft.
- Fig. 2: zeigt das Verfahrensprinzip mit hohem Mengenanteil kondensierbarer leichter Komponenten in der Luft bei simultaner Beladung der Luft mit nichtkondensierbaren leichten Komponenten.

Luft 1, mit hohen Anteilen von leichtsiedenden organischen Komponenten beladen, tritt in eine Kaltwäsche 2 unterhalb einer Waschsäule ein. Die Kaltwäsche 2 besteht im Regelfall aus drei Waschsäulen. Diese Waschsäulen sind vorzugsweise übereinander angeordnet, wobei zwischen der mittleren und unteren Waschsäule ein Entnahmeboden 13 vorgesehen ist. Die beladene Luft 1 durchströmt die Kaltwäsche 2 von unten nach oben, wobei sie durch Kälteträgerströme 3, 4 und 5 direkt gekühlt und die organischen Beladungen direkt kondensiert werden. Die Kälteträgerströme 3, 4 und 5 sind zirkulierende Ströme des Eigenkondensates, die durch regenerative Nutzung des Kälteinhalts des am Kopf der Kaltwäsche 2 abgenommenen Reinluftstromes in Wärmeübertragern 6, 7, 8 und des abzugebenden Flüssigproduktes 9 in einem Wärmeübertrager 10 sowie durch Fremdkältequellen gekühlt werden, wobei eine Kaltdampfkälteanlage 11 Kälte mit mäßigen Kälteparametern zur Verfügung stellt und eine Kaltluft-Kälteanlage 12 Kälte mit anspruchsvollen Parametern produziert. Das abzugebende Flüssigprodukt 9 wird mit einer so niedrigen Temperatur aus der Kaltwäsche 2 entnommen, daß die leichten kondensierbaren Komponenten flüssig vorliegen. Der Entnahmeboden 13 ist zwischen der unteren und mittleren Waschsäule an der Stelle angeordnet, wo die niedrigen, kondensierbaren Komponenten in der flüssigen Phase vorliegen. Das entnommene und abzugebende Flüssigprodukt 9 wird zunächst durch eine Pumpe 14 auf höheren Druck gebracht, bevor im Wärmeübertrager 10 der Kälteinhalt an den Kälteträger der unteren Waschsäule mitgeteilt wird und sich das abzugebende Flüssigprodukt 9 unter Druck auf Umgebungstemperatur erwärmt. Mit dem umlaufenden Teil des Eigenkondensates erfolgt ein Mengenausgleich über eine Armatur 15 nach Maßgabe von Flüssigkeitsständen, wobei sichergestellt ist, daß vorzugsweise Produkte mit hohem Gehalt an leichtsiedenden Anteilen das abzugebende Flüssigprodukt 9 charakterisieren.
Im Abscheider 16 erfolgt eine Feinabscheidung von Wasser 17, das aus der Anlage abgegeben wird.
Die Kaltdampf-Kälteanlage 11 kann zweistufig mit 2 Verdampferstufen arbeiten, so daß die Verdampferstufe mit der höheren Verdampfertemperatur die untere Waschsäule bedient, in der der Hauptanteil des Wassergehaltes ausgeschieden wird. Steht nur eine einstufige Kaltdampf-Kälteanlage zur Verfügung, dann ergibt sich der Sonderfall einer Kaltwäsche mit nur 2 Waschsäulen, wobei die Entnahme zwischen diesen erfolgt.

Als Kältemittel der Kaltluft-Kälteanlage 12 wird ein Teilstrom der Reinluft verwendet. Dieser wird als Kältemittel Luft 19 nach der Kühlung in der Kaltluft-Kälteanlage 12 mit anspruchsvollen Kälteparametern am Kopf der Kaltwäsche 2 zugeführt. Zur Vorkühlung der komprimierten Luft innerhalb der Kaltluft-Kälteanlage 12 wird ein weiterer Kälteträgerstrom 18 der Kaltluft-Kälteanlage 12 zugeführt, der nach Wärmeaufnahme in den Abscheider 16 zurückgeführt wird.
Wenn das abzugebende Flüssigprodukt 9 wasserfrei sein soll, erfolgt eine Wassergrobabscheidung in der Vorlage 21 und die Feinabscheidung im Abscheider 16. Die zirkulierenden Kälteträgerströme 3, 4, 5 und 18 werden aus dem Abscheider 16 wasserfrei entnommen und über eine Pumpe 22 in den Kreislauf zurückgefördert.

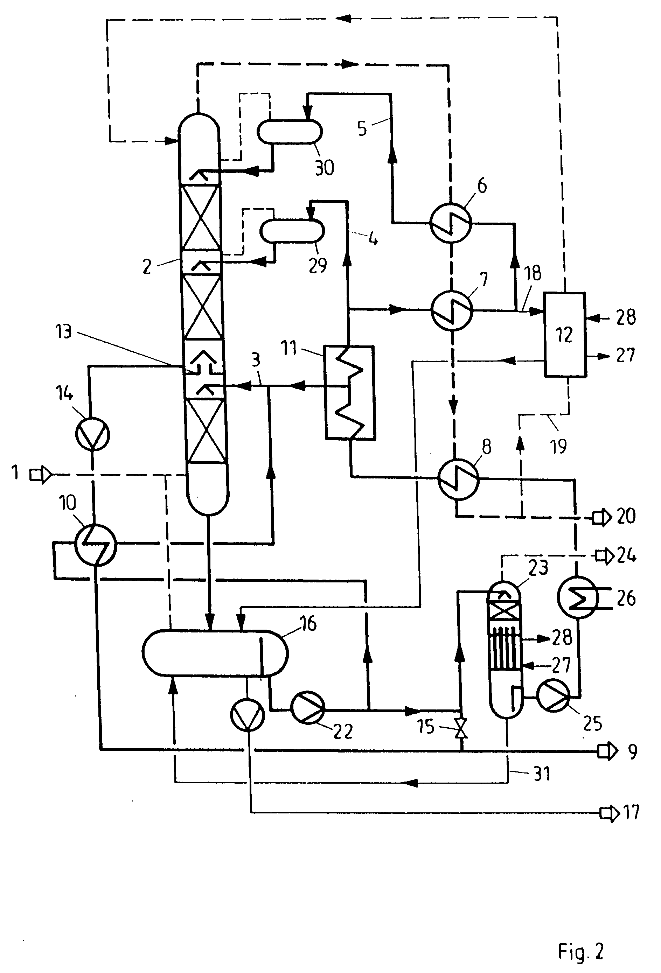

Sind in der Luft 1 auch nichtkondensierbare leichte Komponenten enthalten, wird nach Fig. 2 der zum Wärmeübertrager 8 zurückgeführte Strom des kursierenden Kälteträgers oder der Gesamtstrom des kursierenden Kälteträgers in einem Entgaser 23 thermisch entgast, wobei leichte Komponenten 24 dampfförmig abgegeben oder nach Bedarf mit dem abzugebenden Flüssigprodukt 9 vereinigt werden. Eine wäßrige Phase 31 wird in den Abscheider 16 zurückgeführt. Der entgaste, wasserfreie Kälteträger wird über die Pumpe 25 und Kühler 26 zur Deckung des Kältebedarfes der Kälteträgerströme 3, 4, 5 und 18 regenerativ und durch Fremdkälte gekühlt, gelangt mit Absorptionsfähigkeit für leichte, nichtkondensierbare Komponenten als Waschmittel und für die kondensierbaren Komponenten als Kälteträger mit differenzierten Temperaturen in die Kaltwäsche 2 und übernimmt neben der Direktkühlung der Luft und der Direktkondensation der Dämpfe die Absorption der nichtkondensierbaren Anteile.

Als Wärmeträger für den Entgaser 23 kann bei entsprechender Konstruktion des Apparates wahlweise das erwärmte Einspritzwasser des Verdichters der Kaltluft-Kälteanlage 12 mit einem Vorlauf 27 bzw. Rücklauf 28 verwendet werden.
Bei stark schwankenden Luftmengen und Beladungen bietet die Kaltlagerung in Kälteträgerspeichern 29, 30 die Möglichkeit, die Anlagen auf mittlere Leistungen auszulegen und Leistungsspitzen abzufangen.

### Aufstellung der verwendeten Bezugszeichen

- 1: Luft
- 2: Kaltwäsche
- 3: Kälteträgerstrom
- 4: Kälteträgerstrom
- 5: Kälteträgerstrom
- 6: Wärmeübertrager
- 7: Wärmeübertrager
- 8: Wärmeübertrager
- 9: Flüssigprodukt
- 10: Wärmeübertrager
- 11: Kaltdampf-Kälteanlage
- 12: Kaltluft-Kälteanlage
- 13: Entnahmeboden
- 14: Pumpe
- 15: Armatur
- 16: Abscheider
- 17: Wasser
- 18: Kälteträgerstrom
- 19: Kältemittel Luft
- 20: Reinluftstrom
- 21: Vorlage
- 22: Pumpe
- 23: Entgaser
- 24: leichte Komponenten
- 25: Pumpe
- 26: Kühler
- 27: Wärmeträger
- 28: Wärmeträger
- 29: Kälteträgerspeicher
- 30: Kälteträgerspeicher
- 31: wäßrige Phase

## Patentansprüche

1. Verfahren zur Abscheidung von dampfförmigen Inhaltsstoffen aus mit hohen Anteilen leichtsiedender Komponenten beladener Luft durch Kondensation **dadurch gekennzeichnet**, daß in einer Kaltwäsche (2) an einer Stelle mit tiefen Temperaturen, an der die leichten Komponenten als flüssige Kondensate vorliegen, das kalte Kondensat entnommen, auf hohen Druck gebracht und deren Kälteinhalt in einem Wärmeübertrager (10) einem abzukühlenden Kälteträgerstrom mitgeteilt wird, wobei sich der Entnahmestrom auf Umgebungstemperatur erwärmt, in einer Vorlage (21) von Wasser befreit und das wasserfreie organische Kondensat als Flüssigprodukt (9) aus der Anlage abgegeben wird, während das Mengengleichgewicht zwischen dem abgegebenen Flüssigprodukt (9) und der in der Luft (1) enthaltenen organischen Dampfmenge nach Maßgabe von Flüssigkeitsständen korrigiert und damit zum umlaufenden Kälteträger ein Mengenausgleich hergestellt wird.

2. Verfahren zur Abscheidung von dampfförmigen Inhaltsstoffen aus mit hohen Anteilen leichtsiedender Komponenten beladener Luft durch Kondensation und Absorption, **dadurch gekennzeichnet**, daß in einer Kaltwäsche (2) an einer Stelle mit tiefen Temperaturen, an der die leichten Komponenten als flüssige Kondensate vorliegen, das kalte Kondensat einschließlich der gelösten nichtkondensierbaren Komponenten entnommen, auf hohen Druck gebracht und deren Kälteinhalt in einem Wärmeübertrager (10) einem abzukühlenden Kälteträgerstrom mitgeteilt wird, wobei sich der Entnahmestrom auf Umgebungstemperatur erwärmt und eine Menge des Flüssigproduktes (9) abgegeben wird, die der in der Luft (1) enthaltenen organischen Dampfmenge entspricht und daß der gesamte umlaufende Kälteträger oder der Anteil für die Kälteträgerströme (4), (5) und (18) in einem Entgaser (23) thermisch entgast, die leichten Komponenten (24) am Entgaser (23) oben dampfförmig abgenommen und der entgaste Kälteträger nach der Abscheidung von Wasser mit zusätzlicher Sorptionsfähigkeit für leichte Komponenten zur Vorkühlung als Kälteträger in den Kälteträgerkreislauf rezirkuliert wird.

3. Verfahren nach Anspruch 2, **dadurch gekennzeichnet,** daß der Wärmebedarf des Entgasers (23) vorzugsweise durch Kompressionswärme des Verdichters in der Kaltluft-Kälteanlage (12) gedeckt wird.

4. Verfahren nach Anspruch 1 und 2, **dadurch gekennzeichnet,** daß Leistungsspitzen durch Kälteträgerspeicher (29, 30) am kalten Ende der Kaltwäsche (2) bei mittlerer Auslegung der Anlagenleistung abgedeckt werden.
